# EUROPEAN PATENT APPLICATION

(11) **EP 3 879 446 A2**
(43) Date of publication of application: **15.09.2021**
(21) Application number: 21184065.7
(22) Date of filing: 06.07.2021
(51) Int. Cl.: G06K 9/00

(54) **METHOD FOR DETECTING VEHICLE LANE CHANGE, ROADSIDE DEVICE, CLOUD CONTROL PLATFORM AND PROGRAM PRODUCT**

(30) Priority: 21.12.2020 CN 202011517315
(71) Applicant: Beijing Baidu Netcom Science and Technology Co., Ltd., Beijing 100085 (CN)
(72) Inventor: HUANG, Xiulin, Beijing, 100085 (CN)
(74) Representative: V.O.

(57) **Abstract**

The present disclosure discloses a method and apparatus for detecting a lane change, in particular relates to artificial intelligence, and further relates to the fields of intelligent transportation and image processing technology. A specific implementation includes: performing object detection on a vehicle image acquired by a camera to obtain two-dimensional vehicle information of a vehicle in the vehicle image; determining three-dimensional vehicle information corresponding to the two-dimensional vehicle information using a ground equation and a parameter of the camera; and determining, in response to meeting a detection condition, based on lane location information in a high definition map and the three-dimensional vehicle information, whether the vehicle has a lane change, to obtain a lane change detection result. The present disclosure may solve, using three-dimensional vehicle information, the problem of lane misjudgment caused by a large shooting angle of a two-dimensional vehicle image in the existing art, and effectively improves an accuracy of detecting a vehicle lane change. At the same time, the use of the high definition map improves an accuracy of acquiring lane location information, and further improves an accuracy of detecting the vehicle lane change.

## Description

### TECHNICAL FIELD

The present disclosure relates to the field of computer technology, in particular to the field of artificial intelligence technology, and further to the fields of intelligent transportation and image processing technology, and more particular to a method for detecting a vehicle lane change, a roadside device, a cloud control platform and a program product.

### BACKGROUND

In the field of transportation, vehicle lane change is also known as vehicle merging, which is a common traffic phenomenon. Constant lane change of vehicles is a very dangerous behavior.

Due to vehicle occlusion on the road and lane marking, it is often difficult to realize vehicle change lane through machinery and equipment. For example, an electronic device (such as a roadside device) may mistake two adjacent lanes for the same lane because of a shooting angle, and thus cannot accurately determine a vehicle lane change.

### SUMMARY

A method for detecting a vehicle lane change, a roadside device, a cloud control platform and a program product are provided.

According to a first aspect, a method for detecting a vehicle lane change is provided. The method includes: performing object detection on a vehicle image acquired by a camera to obtain two-dimensional vehicle information of a vehicle in the vehicle image; determining three-dimensional vehicle information corresponding to the two-dimensional vehicle information using a ground equation and a parameter of the camera, both the two-dimensional vehicle information and the three-dimensional vehicle information comprising a vehicle location; and determining, in response to meeting a detection condition, based on lane location information in a high-definition map and the three-dimensional vehicle information, whether the vehicle has a lane change, to obtain a lane change detection result.

According to a second aspect, an apparatus for detecting a vehicle lane change is provided. The apparatus includes: a detection unit, configured to perform object detection on a vehicle image acquired by a camera to obtain two-dimensional vehicle information of a vehicle in the vehicle image; a location determination unit, configured to determine three-dimensional vehicle information corresponding to the two-dimensional vehicle information using a ground equation and a parameter of the camera, both the two-dimensional vehicle information and the three-dimensional vehicle information comprising a vehicle location; and a lane change determination unit, configured to determine, in response to meeting a detection condition, based on lane location information in a high definition map and the three-dimensional vehicle information, whether the vehicle has a lane change, to obtain a lane change detection result.

According to a third aspect, an electronic device is provided. The electronic device includes: one or more processors; and a storage apparatus storing one or more programs. The one or more programs, when executed by the one or more processors, cause the one or more processors to implement a method according to any implementation of the method for detecting a vehicle lane change.

According to a fourth aspect, a roadside device is provided. The roadside device includes the electronic device according to the third aspect.

According to a fifth aspect, a cloud control platform is provided. The cloud control platform includes the electronic device according to the third aspect.

According to a sixth aspect, a computer readable storage medium is provided. The computer readable storage medium stores a computer program thereon. The program, when executed by a processor, implements a method according to any implementation of the method for detecting a vehicle lane change.

According to a seventh aspect, a computer program product is provided. The computer program product includes a computer program. The computer program, when executed by a processor, implements a method according to any implementation of the method for detecting a vehicle lane change.

According to the solution of the present disclosure, the problem of lane misjudgment caused by a large shooting angle of a two-dimensional vehicle image in the existing art may be solved using three-dimensional vehicle information, and effectively improves an accuracy of detecting a vehicle lane change. At the same time, the use of a high definition map improves an accuracy of acquiring lane location information, and further improves an accuracy of detecting the vehicle lane change.

### BRIEF DESCRIPTION OF THE DRAWINGS

By reading detailed description of non-limiting embodiments with reference to following accompanying drawings, other features, objectives and advantages of the present disclosure will become more apparent.
Fig. 1 is an example system architecture diagram to which some embodiments of the present disclosure may be implemented;
Fig. 2 is a flowchart of a method for detecting a vehicle lane change according to an embodiment of the present disclosure;
Fig. 3 is a schematic diagram of an application scenario of the method for detecting a vehicle lane change according to an embodiment of the present disclosure;
Fig. 4 is a flowchart of the method for detecting a vehicle lane change according to another embodiment of the present disclosure;
Fig. 5 is a schematic structural diagram of an apparatus for detecting a vehicle lane change according to an embodiment of the present disclosure; and
Fig. 6 is a block diagram of an electronic device used to implement the method for detecting a vehicle lane change according to embodiments of the present disclosure.

### DETAILED DESCRIPTION OF EMBODIMENTS

The following describes example embodiments of the present disclosure in conjunction with accompanying drawings, which includes various details of embodiments of the present disclosure to facilitate understanding, and they should be considered as merely examples. Therefore, those of ordinary skill in the art should recognize that various changes and modifications may be made to the embodiments described herein without departing from the scope and spirit of the present disclosure. Also, for clarity and conciseness, descriptions of well-known functions and structures are omitted in the following description.

It should be noted that embodiments in the present disclosure and features in the embodiments may be combined with each other on a non-conflict basis. The present disclosure will be described below in detail with reference to the accompanying drawings and in combination with the embodiments.

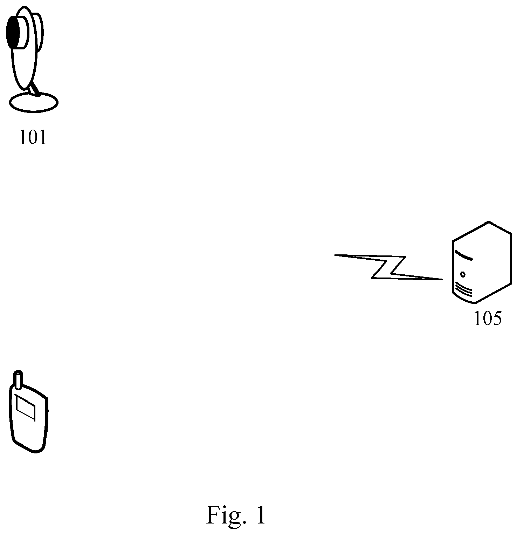

Fig. 1 shows an example system architecture 100 to which an embodiment of a method for detecting a vehicle lane change or an apparatus for detecting a vehicle lane change of the present disclosure may be implemented.

As shown in Fig. 1, the system architecture 100 may include terminal devices 101, 102, 103, a network 104, and a server 105. The network 104 is used to provide a communication link medium between the terminal devices 101, 102, 103 and the server 105. The network 104 may include various connection types, such as wired, wireless communication links, or optic fibers.

A user may use the terminal devices 101, 102, 103 to interact with the server 105 through the network 104 to receive or send messages, etc. Various communication client applications, such as video applications, live streaming applications, instant messaging tools, email clients, or social platform software, may be installed on the terminal devices 101, 102, and 103.

The terminal devices 101, 102, 103 may be hardware or software. When the terminal devices 101, 102, 103 are hardware, they may be various electronic devices having display screens, including but not limited to vehicles (in particular may be electronic control units), roadside devices, smart phones, tablet computers, e-book readers, laptop computers, desktop computers, etc. When the terminal devices 101, 102, 103 are software, they may be installed in the electronic devices listed above. They may be implemented as a plurality of pieces of software or a plurality of software modules (for example, a plurality of pieces of software or a plurality of software modules used to provide distributed services), or as a single piece of software or a single software module, which is not limited herein.

The server 105 may be a server that provides various services, for example, a backend server that provides support for the terminal devices 101, 102, and 103. The backend server may process such as analyze a received vehicle image and other data, and feed back a processing result (such as a lane change detection result) to the terminal devices.

In practice, in addition to an electronic device, a roadside device may also include communication components, etc. The electronic device may be integrated with the communication components, or may be set separately. The electronic device may acquire data from a sensing device (such as a roadside camera), such as pictures and videos, to perform image and video processing and data calculations.

A cloud control platform performs processing in the cloud. An electronic device included in the cloud control platform may acquire data from a sensing device (such as a roadside camera), such as pictures and videos, to perform image and video processing and data calculations; the cloud control platform may also be called a vehicle-road collaborative management platform, an edge computing platform, a cloud computing platform, a central system, a cloud server, etc.

It should be noted that the method for detecting a vehicle lane change provided by the embodiments of the present disclosure may be performed by the server 105 or the terminal devices 101, 102, 103, and accordingly, the apparatus for detecting a vehicle lane change may be provided in the server 105 or the terminal devices 101, 102, 103.

It should be understood that the number of terminal devices, networks and servers in Fig. 1 is merely illustrative. Depending on the implementation needs, there may be any number of terminal devices, networks and servers.

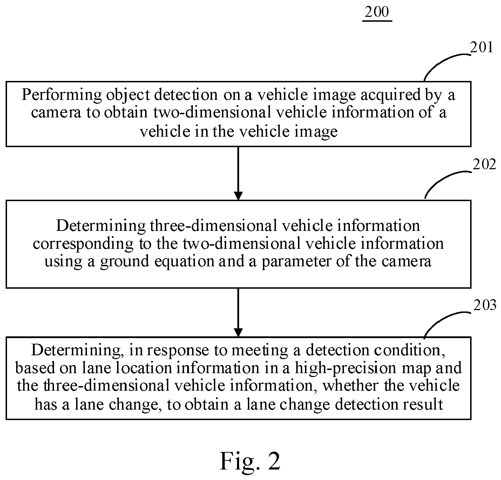

With further reference to Fig. 2, illustrating a flow 200 of a method for detecting a vehicle lane change according to an embodiment of the present disclosure. The method for detecting a vehicle lane change includes the following steps.

Step 201, performing object detection on a vehicle image acquired by a camera to obtain two-dimensional vehicle information of a vehicle in the vehicle image.

In the present embodiment, an executing body (such as the server or the terminal devices shown in Fig. 1) of the method for detecting a vehicle lane change may perform object detection on the vehicle image acquired by the camera to obtain the two-dimensional vehicle information of the vehicle in the vehicle image. The camera here may include one or more cameras, and the plurality of cameras here may be two cameras. The two-dimensional vehicle information here may include a two-dimensional vehicle location. The two-dimensional vehicle location may refer to a location in the vehicle image obtained based on an object detection result. For example, the object detection result obtained by object detection, that is, the two-dimensional vehicle information may be a detection frame containing the vehicle. The detection frame may be represented as a width, a height, and coordinates a target point (such as a center point and a vertex) of the detection frame. Alternatively, the detection frame may be represented as 4 vertices of the detection frame.

The above object detection may use a deep neural network for detection. In practice, the executing body may obtain the two-dimensional vehicle information of the vehicle in the vehicle image in various methods. For example, the executing body may directly use the above object detection result as a vehicle location, that is, the two-dimensional vehicle information. As another example, the executing body may perform preset processing on the object detection result, such as inputting into a preset adjustment model, or performing preset processing such as image interception, to obtain a preset processing result, and use the preset processing result as the two-dimensional vehicle information. In practice, the camera here may be a camera of the vehicle for capturing, or a roadside camera.

Step 202, determining three-dimensional vehicle information corresponding to the two-dimensional vehicle information using a ground equation and a parameter of the camera, both the two-dimensional vehicle information and the three-dimensional vehicle information including a vehicle location.

In the present embodiment, the executing body may determine the three-dimensional vehicle information corresponding to the two-dimensional vehicle information using the ground equation and the parameter of the camera. Not only the two-dimensional vehicle information includes the vehicle location (the two-dimensional vehicle location), but the three-dimensional vehicle information may also include the vehicle location, and the vehicle location included in the three-dimensional vehicle information is a three-dimensional vehicle location. The three-dimensional vehicle location may be represented as a cube containing the vehicle, for example, the cube may be represented as a point (such as a center point or a vertex) and a length, width, and height of the cube. Alternatively, the three-dimensional vehicle location may also be represented as a center point of the vehicle.

The parameter of the camera refers to an internal parameter and an external parameter. In practice, the executing body may use the external parameter of the camera and a ground equation in a world coordinate system to obtain a ground equation in a camera coordinate system of the camera. Then, the executing body may use the internal parameter of the camera and the ground equation in the camera coordinate system to calculate a ground depth map, and extract a depth feature of the vehicle from the ground depth map. Using the two-dimensional vehicle information, i.e., the two-dimensional vehicle location (for example, coordinates of the 4 vertices of the detection frame containing the vehicle), and depth information of the vehicle in the ground depth map, the three-dimensional vehicle location is determined, that is, the three-dimensional vehicle information.

Step 203, determining, in response to meeting a detection condition, based on lane location information in a high definition map and the three-dimensional vehicle information, whether the vehicle has a lane change, to obtain a lane change detection result.

In the present embodiment, the executing body may determine whether the vehicle has the lane change based on the lane location information in the high definition map and the three-dimensional vehicle information, in response to that the detection condition is met, and use a determined result as the lane change detection result. The lane location information may be represented by a lane line location, or by a coordinate range of each lane (such as coordinates of a lane boundary). The detection condition here may be various, such as obtaining a detection instruction.

In practice, the executing body may determine whether the vehicle has the lane change based on the lane location information in the high definition map and the three-dimensional vehicle information using various methods. For example, when the lane location information is represented as the lane line location, the executing body may compare the lane line location with the location of the cube containing the vehicle. If the executing body detects that a body of the vehicle (for example, the body refers to a preset area proportion reaching a bottom surface of the vehicle) crosses the lane line location, it may be determined that the vehicle has the lane change. Alternatively, the executing body may make a judgment based on a relationship between the lane line location and a vehicle center as the vehicle location. If the executing body detects that the vehicle center crosses the lane line, that is, detects that a positional relationship between the vehicle center and the lane line has changed, it may be determined that the vehicle has the lane change. In addition, when the lane location information is represented as a lane coordinate range, the executing body may judge whether most areas of the bottom surface of the vehicle (areas larger than the preset area proportion) are within the lane coordinate range.

The method provided by the above embodiment of the present disclosure may solve, using three-dimensional vehicle information, the problem of lane misjudgment caused by a large shooting angle of a two-dimensional vehicle image in the existing art, and effectively improves an accuracy of detecting a vehicle lane change. At the same time, the use of a high definition map improves an accuracy of acquiring lane location information, and further improves an accuracy of detecting the vehicle lane change.

In some alternative implementations of the present embodiment, the determining whether the vehicle has a lane change, to obtain a lane change detection result in the above step 203, may include: determining whether the vehicle has a constant lane change within a preset historical duration, to obtain the lane change detection result, where the preset historical duration is the number of historical frames or a historical time length, and the number of historical frames is a preset number of frames of vehicle images continuously acquired by the camera.

In these alternative implementations, the executing body may determine whether the vehicle has the constant lane change within the preset historical duration, and use a determined result as the lane change detection result. The preset historical duration here may refer to whether the vehicle has a constant lane change in a past period of time calculated from the current time. The preset historical duration here may be represented in various methods, such as may be the number of historical frames. For example, in 75 frames of vehicle images acquired by the camera in the past, it may track whether the vehicle has the lane change more than twice. Alternatively, the preset historical duration may also be the historical time length. For example, the executing body may determine whether the vehicle has the lane change more than twice in past 5 seconds.

These alternative implementations may improve an accuracy of detecting a constant lane change using the three-dimensional vehicle information and the high definition map.

In some alternative implementations of the present embodiment, the in response to meeting a detection condition in the above step 203, may include: determining that the detection condition is met, in response to reaching a detection period duration, where the detection period duration is greater than an image acquisition period duration and less than a preset period duration.

In these alternative implementations, the executing body may determine that the detection condition is met, if the detection period duration is reached. For example, the executing body may use 15 Hz as a detection frequency, then whenever a period corresponding to 15 Hz is reached, the executing body may determine that the detection condition is met.

These implementations may use period detection to determine whether the vehicle has a constant lane change behavior, so as to ensure that no constant lane change is missed, and traffic safety of the vehicle may be ensured. In addition, the detection period here may be short and longer than the period duration for the camera to capture vehicle images, thereby leaving sufficient image processing time for the device.

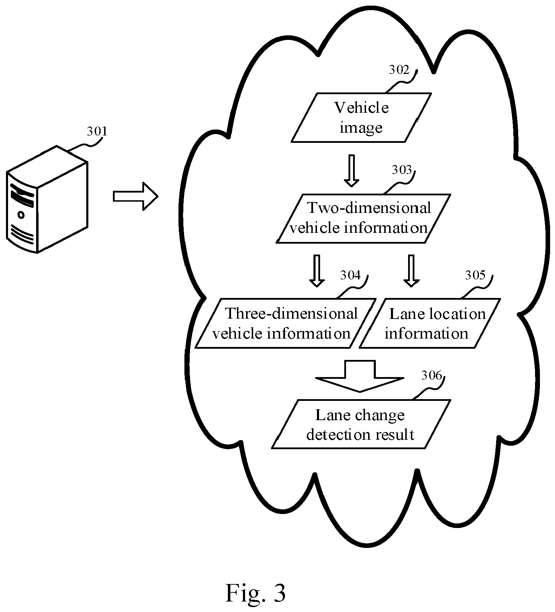

With further reference to Fig. 3, Fig. 3 is a schematic diagram of an application scenario of the method for detecting a vehicle lane change according to the present embodiment. In the application scenario of Fig. 3, an executing body 301 performs object detection on a vehicle image 302 acquired by a camera to obtain two-dimensional vehicle information 303 of a vehicle in the vehicle image. The executing body 301 determines three-dimensional vehicle information 304 corresponding to the two-dimensional vehicle information 303 using a ground equation and a parameter of the camera, where the two-dimensional vehicle information 303 and the three-dimensional vehicle information 304 both include a vehicle location. In response to that a detection condition is met, the executing body 301 determines whether the vehicle has a lane change, based on lane location information 305 in a high definition map and the three-dimensional vehicle information 304, to obtain a lane change detection result 306.

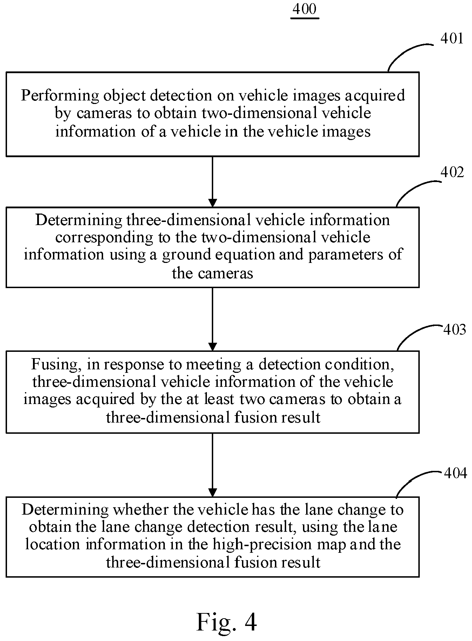

With further reference to Fig. 4, illustrating a flow 400 of another embodiment of the method for detecting a vehicle lane change. The number of the cameras is at least two, and the vehicle images acquired by the at least two cameras present the vehicle. The flow 400 includes the following steps.

Step 401, performing object detection on vehicle images acquired by cameras to obtain two-dimensional vehicle information of a vehicle in the vehicle images.

In the present embodiment, an executing body (such as the server or the terminal devices shown in Fig. 1) of the method for detecting a vehicle lane change may perform object detection on the vehicle images acquired by the cameras to obtain the two-dimensional vehicle information of the vehicle in the vehicle images. The camera here may by one or more cameras, and the plurality of cameras here may be two cameras.

Step 402, determining three-dimensional vehicle information corresponding to the two-dimensional vehicle information using a ground equation and a parameter of the camera, both the two-dimensional vehicle information and the three-dimensional vehicle information including a vehicle location.

In the present embodiment, the executing body may determine the three-dimensional vehicle information corresponding to the two-dimensional vehicle information using the ground equation and the parameters of the cameras. Not only the two-dimensional vehicle information includes the vehicle location (the two-dimensional vehicle location), but the three-dimensional vehicle information may also include the vehicle location, and the vehicle location included in the three-dimensional vehicle information is a three-dimensional vehicle location. The three-dimensional vehicle location may be represented as a cube containing the vehicle, for example, the cube may be represented as a point (such as a center point or a vertex) and a length, width, and height of the cube. Alternatively, the three-dimensional vehicle location may also be represented as a center point of the vehicle.

Step 403, fusing, in response to meeting a detection condition, three-dimensional vehicle information of the vehicle images acquired by the at least two cameras to obtain a three-dimensional fusion result.

In the present embodiment, the executing body may fuse the three-dimensional vehicle information of the vehicle images acquired by the at least two cameras, in response to that the detection condition is met, and determine a fused result as the three-dimensional fusion result.

Step 404, determining whether the vehicle has the lane change to obtain the lane change detection result, using the lane location information in the high definition map and the three-dimensional fusion result.

In the present embodiment, the executing body may use the lane location information in the high definition map and the three-dimensional fusion result to track whether the vehicle has the lane change. The lane change here may be a constant lane change or a single lane change.

The present embodiment may use the fusion result of the three-dimensional vehicle information captured by the plurality of cameras to track the vehicle lane change, which avoids the problem of low detection accuracy caused by an excessive shooting angle of the vehicle image or a screen occlusion, and significantly improves the accuracy of detecting a lane change.

In some alternative implementations of the present embodiment, the lane location information is a lane line location; and the determining whether the vehicle has the lane change, using the lane location information in the high definition map and the three-dimensional fusion result in step 404, may include: performing location comparison between a vehicle location in the three-dimensional fusion result and the lane line location in the high definition map to obtain a location comparison result; and tracking whether the vehicle has the constant lane change within the preset historical duration, based on each location comparison result of the vehicle within the preset historical duration.

In these alternative implementations, the lane location information here may be the lane line location. The executing body may perform location comparison between the vehicle location of the vehicle in the three-dimensional fusion result, i.e., the three-dimensional vehicle location, and the lane line location in the high definition map to obtain the location comparison result. Then, the executing body may track whether the vehicle has the constant lane change within the preset historical duration, based on each location comparison result of the vehicle within the preset historical duration. If it is determined that a body of the vehicle crosses the lane line location twice in a consecutive preset number (such as 75) of location comparison results, it may be determined that the vehicle has the constant lane change.

These implementations may accurately detect the constant lane change using the fusion result of the three-dimensional vehicle information captured by the plurality of cameras and the lane line location in the high definition map.

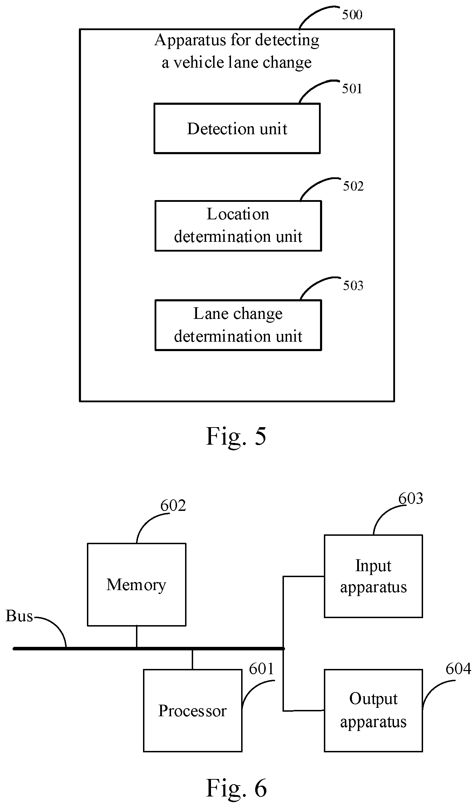

With further reference to Fig. 5, as an implementation of the method shown in the above figures, an embodiment of the present disclosure provides an apparatus for detecting a vehicle lane change. The embodiment of the apparatus corresponds to the embodiment of the method shown in Fig. 2. In addition to the features described below, the embodiment of the apparatus may also include the same or corresponding features or effects as the embodiment of the method as shown in Fig. 2. The apparatus may be applied to various electronic devices.

As shown in Fig. 5, an apparatus 500 for detecting a vehicle lane change of the present embodiment includes: a detection unit 501, a location determination unit 502 and a lane change determination unit 503. The detection unit 501 is configured to perform object detection on a vehicle image acquired by a camera to obtain two-dimensional vehicle information of a vehicle in the vehicle image. The location determination unit 502 is configured to determine three-dimensional vehicle information corresponding to the two-dimensional vehicle information using a ground equation and a parameter of the camera, both the two-dimensional vehicle information and the three-dimensional vehicle information including a vehicle location. The lane change determination unit 503 is configured to determine, in response to meeting a detection condition, based on lane location information in a high definition map and the three-dimensional vehicle information, whether the vehicle has a lane change, to obtain a lane change detection result.

In the present embodiment, for the specific processing and the technical effects of the detection unit 501, the location determination unit 502 and the lane change determination unit 503 in the apparatus 500 for detecting a vehicle lane change, reference may be made to the relevant descriptions of step 201, step 202 and step 203 in the embodiment corresponding to Fig. 2 respectively, and repeated description thereof will be omitted.

In some alternative implementations of the present embodiment, the lane change determination unit is further configured to determine whether the vehicle has a lane change, to obtain a lane change detection result by: determining whether the vehicle has a constant lane change within a preset historical duration, to obtain the lane change detection result, where the preset historical duration is the number of historical frames or a historical time length, and the number of historical frames is a preset number of frames of vehicle images continuously acquired by the camera.

In some alternative implementations of the present embodiment, the number of the camera is at least two, and the vehicle images acquired by the at least two cameras present the vehicle; the lane change determination unit is further configured to determine whether the vehicle has a lane change, based on lane location information in a high definition map and the three-dimensional vehicle information by: fusing three-dimensional vehicle information of the vehicle images acquired by the at least two cameras to obtain a three-dimensional fusion result; and determining whether the vehicle has the lane change, using the lane location information in the high definition map and the three-dimensional fusion result.

In some alternative implementations of the present embodiment, the lane location information is a lane line location; and the lane change determination unit is further configured to determine whether the vehicle has the lane change, using the lane location information in the high definition map and the three-dimensional fusion result by: performing location comparison between a vehicle location in the three-dimensional fusion result and the lane line location in the high definition map to obtain a location comparison result; and tracking whether the vehicle has the constant lane change within the preset historical duration, based on each location comparison result of the vehicle within the preset historical duration.

In some alternative implementations of the present embodiment, the lane change determination unit is further configured to perform the in response to meeting a detection condition by: determining that the detection condition is met, in response to reaching a detection period duration, where the detection period duration is greater than an image acquisition period duration and less than a preset period duration.

According to an embodiment of the present disclosure, the present disclosure further provides an electronic device, a readable storage medium, a roadside device, a cloud control platform, and a computer program product.

As shown in Fig. 6, is a block diagram of an electronic device of the method for detecting a vehicle lane change according to an embodiment of the present disclosure. The electronic device is intended to represent various forms of digital computers, such as laptop computers, desktop computers, workbenches, personal digital assistants, servers, blade servers, mainframe computers, and other suitable computers. The electronic device may also represent various forms of mobile apparatuses, such as personal digital processors, cellular phones, smart phones, wearable devices, and other similar computing apparatuses. The components shown herein, their connections and relationships, and their functions are merely examples, and are not intended to limit the implementation of the present disclosure described and/or claimed herein.

As shown in Fig. 6, the electronic device includes: one or more processors 601, a memory 602, and interfaces for connecting various components, including high-speed interfaces and low-speed interfaces. The various components are connected to each other using different buses, and may be installed on a common motherboard or in other methods as needed. The processor may process instructions executed within the electronic device, including instructions stored in or on the memory to display graphic information of GUI on an external input/output apparatus (such as a display device coupled to the interface). In other embodiments, a plurality of processors and/or a plurality of buses may be used together with a plurality of memories and a plurality of memories if desired. Similarly, a plurality of electronic devices may be connected, and the devices provide some necessary operations (for example, as a server array, a set of blade servers, or a multi-processor system). In Fig. 6, one processor 601 is used as an example.

The memory 602 is a non-transitory computer readable storage medium provided by the present disclosure. The memory stores instructions executable by at least one processor, so that the at least one processor performs the method for detecting a vehicle lane change provided by the present disclosure. The non-transitory computer readable storage medium of the present disclosure stores computer instructions for causing a computer to perform the method for detecting a vehicle lane change provided by the present disclosure.

The memory 602, as a non-transitory computer readable storage medium, may be used to store non-transitory software programs, non-transitory computer executable programs and modules, such as program instructions/modules corresponding to the method for detecting a vehicle lane change in the embodiments of the present disclosure (for example, the detection unit 501, the location determination unit 502 and the lane change determination unit 503 as shown in Fig. 5). The processor 601 executes the non-transitory software programs, instructions, and modules stored in the memory 602 to execute various functional applications and data processing of the server, that is, to implement the method for detecting a vehicle lane change in the foregoing method embodiments.

The memory 602 may include a storage program area and a storage data area, where the storage program area may store an operating system and an application program required by at least one function; and the storage data area may store such as data created by the use of the electronic device for detecting a vehicle lane change. In addition, the memory 602 may include a high-speed random access memory, and may also include a non-transitory memory, such as at least one magnetic disk storage device, a flash memory or other non-transitory solid state storage devices. In some embodiments, the memory 602 may optionally include a memory disposed remotely relative to processor 601, which may be connected through a network to the electronic device for detecting a vehicle lane change. Examples of such networks include, but are not limited to, the Internet, enterprise intranets, local area networks, mobile communication networks and combinations thereof.

The electronic device for detecting a vehicle lane change may also include: an input apparatus 603 and an output apparatus 604. The processor 601, the memory 602, the input apparatus 603 and the output apparatus 604 may be connected through a bus or in other ways, and an example of the connection through a bus is shown in Fig. 6.

The input apparatus 603 may receive input digital or character information, and generate key signal inputs related to user settings and function control of the electronic device of the method for detecting a target object, such as touch screen, keypad, mouse, trackpad, touchpad, pointing stick, one or more mouse buttons, trackball, joystick and other input apparatuses. The output apparatus 604 may include a display device, an auxiliary lighting apparatus (for example, LED), a tactile feedback apparatus (for example, a vibration motor), and the like. The display device may include, but is not limited to, a liquid crystal display (LCD), a light emitting diode (LED) display, and a plasma display. In some embodiments, the display device may be a touch screen.

Various embodiments of the systems and technologies described herein may be implemented in digital electronic circuit systems, integrated circuit systems, dedicated ASICs (application specific integrated circuits), computer hardware, firmware, software, and/or combinations thereof. These various embodiments may include: being implemented in one or more computer programs that can be executed and/or interpreted on a programmable system that includes at least one programmable processor. The programmable processor may be a dedicated or general-purpose programmable processor, and may receive data and instructions from a storage system, at least one input apparatus, and at least one output apparatus, and transmit the data and instructions to the storage system, the at least one input apparatus, and the at least one output apparatus.

These computing programs (also referred to as programs, software, software applications, or codes) include machine instructions of the programmable processor and may use high-level processes and/or object-oriented programming languages, and/or assembly/machine languages to implement these computing programs. As used herein, the terms "machine readable medium" and "computer readable medium" refer to any computer program product, device, and/or apparatus (for example, magnetic disk, optical disk, memory, programmable logic apparatus (PLD)) used to provide machine instructions and/or data to the programmable processor, including machine readable medium that receives machine instructions as machine readable signals. The term "machine readable signal" refers to any signal used to provide machine instructions and/or data to the programmable processor.

In order to provide interaction with a user, the systems and technologies described herein may be implemented on a computer, the computer has: a display apparatus for displaying information to the user (for example, CRT (cathode ray tube) or LCD (liquid crystal display) monitor); and a keyboard and a pointing apparatus (for example, mouse or trackball), and the user may use the keyboard and the pointing apparatus to provide input to the computer. Other types of apparatuses may also be used to provide interaction with the user; for example, feedback provided to the user may be any form of sensory feedback (for example, visual feedback, auditory feedback, or tactile feedback); and any form (including acoustic input, voice input, or tactile input) may be used to receive input from the user.

The systems and technologies described herein may be implemented in a computing system that includes backend components (e.g., as a data server), or a computing system that includes middleware components (e.g., application server), or a computing system that includes frontend components (for example, a user computer having a graphical user interface or a web browser, through which the user may interact with the implementations of the systems and the technologies described herein), or a computing system that includes any combination of such backend components, middleware components, or frontend components. The components of the system may be interconnected by any form or medium of digital data communication (e.g., communication network). Examples of the communication network include: local area networks (LAN), wide area networks (WAN), the Internet, and blockchain networks.

The computer system may include a client and a server. The client and the server are generally far from each other and usually interact through the communication network. The relationship between the client and the server is generated by computer programs that run on the corresponding computer and have a client-server relationship with each other.

The flow charts and block diagrams in the accompanying drawings illustrate architectures, functions and operations that may be implemented according to the systems, methods and computer program products of the various embodiments of the present disclosure. In this regard, each of the blocks in the flow charts or block diagrams may represent a module, a program segment, or a code portion, said module, program segment, or code portion including one or more executable instructions for implementing specified logic functions. It should also be noted that, in some alternative implementations, the functions denoted by the blocks may occur in a sequence different from the sequences shown in the accompanying drawings. For example, any two blocks presented in succession may be executed, substantially in parallel, or they may sometimes be in a reverse sequence, depending on the function involved. It should also be noted that each block in the block diagrams and/or flow charts as well as a combination of blocks may be implemented using a dedicated hardware-based system performing specified functions or operations, or by a combination of a dedicated hardware and computer instructions.

The units involved in the embodiments of the present disclosure may be implemented by means of software or hardware. The described units may also be provided in a processor, for example, may be described as: a processor including a detection unit, a location determination unit and a lane change determination unit. Here, the names of these units do not in some cases constitute limitations to such units themselves. For example, the detection unit may also be described as "a unit configured to perform object detection on a vehicle image acquired by a camera to obtain two-dimensional vehicle information of a vehicle in the vehicle image".

In another aspect, an embodiment of the present disclosure further provides a computer readable medium. The computer readable medium may be included in the apparatus in the above described embodiments, or a stand-alone computer readable medium not assembled into the apparatus. The computer readable medium carries one or more programs, the one or more programs, when executed by the apparatus, cause the apparatus to: perform object detection on a vehicle image acquired by a camera to obtain two-dimensional vehicle information of a vehicle in the vehicle image; determine three-dimensional vehicle information corresponding to the two-dimensional vehicle information using a ground equation and a parameter of the camera, both the two-dimensional vehicle information and the three-dimensional vehicle information including a vehicle location; and determine, in response to meeting a detection condition, based on lane location information in a high definition map and the three-dimensional vehicle information, whether the vehicle has a lane change, to obtain a lane change detection result.

The above description only provides an explanation of the preferred embodiments of the present disclosure and the technical principles used. It should be appreciated by those skilled in the art that the inventive scope of the present disclosure is not limited to the technical solutions formed by the particular combinations of the above-described technical features. The inventive scope should also cover other technical solutions formed by any combinations of the above-described technical features or equivalent features thereof without departing from the concept of the present disclosure. Technical schemes formed by the above-described features being interchanged with, but not limited to, technical features with similar functions disclosed in the present disclosure are examples.

## Claims

1. A method for detecting a vehicle lane change, the method comprising:
performing (201) object detection on a vehicle image acquired by a camera to obtain two-dimensional vehicle information of a vehicle in the vehicle image;
determining (202) three-dimensional vehicle information corresponding to the two-dimensional vehicle information using a ground equation and a parameter of the camera, both the two-dimensional vehicle information and the three-dimensional vehicle information comprising a vehicle location; and
determining (203), in response to meeting a detection condition, based on lane location information in a high-definition map and the three-dimensional vehicle information, whether the vehicle has a lane change, to obtain a lane change detection result.

2. The method according to claim 1, wherein the determining whether the vehicle has a lane change, to obtain a lane change detection result, comprises:
determining whether the vehicle has a constant lane change within a preset historical duration, to obtain the lane change detection result, wherein the preset historical duration is a number of historical frames or a historical time length, and the number of historical frames is a preset number of frames of vehicle images continuously acquired by the camera.

3. The method according to claim 1 or 2, wherein a number of the camera is at least two, and the vehicle images acquired by the at least two cameras present the vehicle;
the determining whether the vehicle has a lane change, based on lane location information in a high definition map and the three-dimensional vehicle information, comprises:
fusing three-dimensional vehicle information of the vehicle images acquired by the at least two cameras to obtain a three-dimensional fusion result; and
determining whether the vehicle has the lane change, using the lane location information in the high definition map and the three-dimensional fusion result.

4. The method according to claim 3, wherein the lane location information is a lane line location;
the determining whether the vehicle has the lane change, using the lane location information in the high definition map and the three-dimensional fusion result, comprises:
performing location comparison between a vehicle location in the three-dimensional fusion result and the lane line location in the high definition map to obtain a location comparison result; and
tracking whether the vehicle has the constant lane change within the preset historical duration, based on each location comparison result of the vehicle within the preset historical duration.

5. The method according to any one of claims 1-4, wherein the in response to meeting a detection condition, comprises:
determining that the detection condition is met, in response to reaching a detection period duration, wherein the detection period duration is greater than an image acquisition period duration and less than a preset period duration.

6. An apparatus for detecting a vehicle lane change, the apparatus comprising:
a detection unit (501), configured to perform object detection on a vehicle image acquired by a camera to obtain two-dimensional vehicle information of a vehicle in the vehicle image;
a location determination unit (502), configured to determine three-dimensional vehicle information corresponding to the two-dimensional vehicle information using a ground equation and a parameter of the camera, both the two-dimensional vehicle information and the three-dimensional vehicle information comprising a vehicle location; and
a lane change determination unit (503), configured to determine, in response to meeting a detection condition, based on lane location information in a high definition map and the three-dimensional vehicle information, whether the vehicle has a lane change, to obtain a lane change detection result.

7. The apparatus according to claim 6, wherein the lane change determination unit (503) is further configured to determine whether the vehicle has a lane change, to obtain a lane change detection result by:
determining whether the vehicle has a constant lane change within a preset historical duration, to obtain the lane change detection result, wherein the preset historical duration is a number of historical frames or a historical time length, and the number of historical frames is a preset number of frames of vehicle images continuously acquired by the camera.

8. The apparatus according to claim 6 or 7, wherein a number of the camera is at least two, and the vehicle images acquired by the at least two cameras present the vehicle;
the lane change determination unit is further configured to determine whether the vehicle has a lane change, based on lane location information in a high definition map and the three-dimensional vehicle information by:
fusing three-dimensional vehicle information of the vehicle images acquired by the at least two cameras to obtain a three-dimensional fusion result; and
determining whether the vehicle has the lane change, using the lane location information in the high definition map and the three-dimensional fusion result.

9. The apparatus according to claim 8, wherein the lane location information is a lane line location;
the lane change determination unit is further configured to determine whether the vehicle has the lane change, using the lane location information in the high definition map and the three-dimensional fusion result by:
performing location comparison between a vehicle location in the three-dimensional fusion result and the lane line location in the high definition map to obtain a location comparison result; and
tracking whether the vehicle has the constant lane change within the preset historical duration, based on each location comparison result of the vehicle within the preset historical duration.

10. The apparatus according to any one of claims 6 -9, wherein the lane change determination unit (503) is further configured to perform the in response to meeting a detection condition by:
determining that the detection condition is met, in response to reaching a detection period duration, wherein the detection period duration is greater than an image acquisition period duration and less than a preset period duration.

11. An electronic device, comprising:
one or more processors (601); and
a storage apparatus (602) storing one or more programs,
wherein the one or more programs, when executed by the one or more processors, cause the one or more processors to implement the method according to any one of claims 1-5.

12. A computer readable storage medium, storing a computer program thereon, wherein the program, when executed by a processor, implements the method according to any one of claims 1-5.

13. A roadside device, comprising the electronic device according to claim 11.

14. A cloud control platform, comprising the electronic device according to claim 11.

15. A computer program product, comprising a computer program, wherein the computer program, when executed by a processor, implements the method according to any one of claims 1-5.
